# EUROPEAN PATENT SPECIFICATION

(11) **EP 3 730 378 B1**
(45) Date of publication and mention of the grant of the patent: **11.02.2026**
(21) Application number: 17935741.3
(22) Date of filing: 28.12.2017
(51) Int. Cl.: B61K 9/06, B60L 15/38

(54) **TRACTION MOTOR BEARING TEMPERATURE MONITORING ALERT CONTROL METHOD, SYSTEM AND RELATED DEVICE**
VERFAHREN ZUR STEUERUNG VON ALARMEN DER ANTRIEBSMOTORLAGERTEMPERATURÜBERWACHUNG, SYSTEM UND ZUGEHÖRIGE VORRICHTUNG
PROCÉDÉ, SYSTÈME ET DISPOSITIF ASSOCIÉ DE COMMANDE D'ALERTE DE SURVEILLANCE DE TEMPÉRATURE DE PALIER DE MOTEUR DE TRACTION

(30) Priority: 20.12.2017 CN 201711384552
(43) Date of publication of application: 28.10.2020
(73) Proprietor: CRRC Changchun Railway Vehicles Co., Ltd., Changchun, Jilin 130000 (CN)
(72) Inventor: HUA, Minglei, Jilin 130000 (CN); LI, Qiang, Jilin 130000 (CN); YU, Kai, Jilin 130000 (CN)
(74) Representative: Reddie & Grose LLP
(86) International application number: PCT/CN2017/119214
(87) International publication number: WO 2019/119498

(56) References cited:
- WO-A1-2017/145572
- WO-A1-2017/145574
- WO-A1-2017/187846
- WO-A2-2007/136947
- AU-A1- 2015 200 168
- CN-A- 102 798 413
- CN-A- 103 386 992
- CN-A- 105 313 919
- CN-A- 105 313 919
- CN-A- 106 314 203
- CN-A- 106 314 203
- CN-A- 106 404 201
- CN-A- 106 828 106
- CN-A- 106 828 106
- CN-B- 103 373 367
- CN-B- 105 083 301
- CN-U- 205 981 278
- CN-U- 206 734 315
- CN-U- 207 292 031
- US-A1- 2006 131 464
- US-A1- 2019 162 604
- US-A1- 2019 248 386
- US-B1- 6 286 992

## Description

### FIELD

The present disclosure relates to the technical field of traction motor fault monitoring, and in particular to a monitoring and alarming control method, system and device for a traction motor bearing temperature and a computer readable storage medium.

### BACKGROUND

As the speed of a Multiple Units train increases, an impact, a power effect and vibration on a rail applied by the train increase. In this case, safety requirements on rotating parts of the train are strict. A traction motor is a key rotating part of the Multiple Units, which is generally installed on a bogie of the train and is critical to the high speed operation safety of the train. Therefore, the operation safety of the train may be affected once the bearing wears out or has defects.

In a traditional traction motor bearing monitoring system, only a bearing temperature is monitored, and monitoring and alarming are performed on the Multiple Units based on a bearing temperature threshold. The alarm includes two alarm levels. At the first alarm level, the bearing temperature T is higher than 120 Celsius degrees and the speed is limited as 200 kilometers per hour. At the second alarm level, the bearing temperature T is higher than 140 Celsius degrees and the speed is limited as 140 kilometers per hour. The monitoring and alarming method is relatively simple and cannot effectively ensure a safe operation of the Multiple Units. It is not accurate enough to determine a bearing damage status only based on the temperature. In addition, in the case of a serious bearing damage, the maximum speed limit is 140 kilometers per hour, which still forms potential safety hazards for the operation of the train. The alarm level is required to be further upgraded and the train speed is required to be further reduced if necessary. US 2006131464 discloses a system for sensing a condition of a rail vehicle undercarriage component includes a sensor comprising an array of infrared sensing elements. Each of the elements may be aimed at a different region of a target area of a rail vehicle undercarriage component to generate respective scanning waveform signature data corresponding to each different region. The sensor may be oriented so that at least one of the elements receives unobstructed infrared emissions from the undercarriage component of a rail vehicle passing the sensor. The system also includes a memory for storing characteristic waveform signature data corresponding to known undercarriage components. In addition, the system includes a processor for processing the scanning waveform signature data with respect to the characteristic waveform signature data stored in memory to identify a type of the rail vehicle undercarriage component being scanned and to extract information indicative of a health condition of the rail vehicle undercarriage component being identified.

Therefore, it is desired to overcome the technical defects of the traditional bearing detection method and provide a bearing temperature monitoring and alarming control method by those skilled in the art. With the method, a fault detection is more comprehensive and an actual state of the traction motor is determined more accurately.

### SUMMARY

A monitoring and alarming control method for a traction motor bearing temperature is provided according to the present disclosure. In the method, whether a bearing of the traction motor is in a failure state is determined based on a temperature of the bearing. In addition, an actual state of the bearing of a traction motor can be effectively determined in conjunction with multiple angles and multiple events, based on other determining basis possibly existing when the bearing of the traction motor is in the failure state. Strict fault levels and speed limit standards corresponding to the fault levels are defined based on comprehensive monitoring parameters, so as to ensure a safe and reliable operation of a train.

A monitoring and alarming control system and device for a traction motor bearing temperature, and a computer readable storage medium are further provided according to the present disclosure.

In view of the above, a monitoring and alarming control method for a traction motor bearing temperature is provided according to the present disclosure. The method includes: acquiring a real-time bearing temperature of a traction motor installed on a train from a bearing temperature sensor of the traction motor and detecting a fault of the traction motor, where the fault includes bearing speed sensor fault and a grounding fault of the traction motor; determining whether the real-time bearing temperature exceeds a first temperature threshold in the case of determining that the bearing temperature sensor is not in a failure state; determining whether the real-time bearing temperature exceeds a second temperature threshold or whether the fault of the traction motor occurs, if the real-time bearing temperature exceeds the first temperature threshold; limiting a highest travel speed of the train as a first speed threshold and controlling both an inverter of a traction converter in the traction motor and a cooling fan in the traction motor to be in a traction motor protection mode, if the real-time bearing temperature does not exceed the second temperature threshold and the fault of the traction motor does not occur; limiting the highest travel speed as a second speed threshold and controlling the inverter and the cooling fan to be in the traction motor protection mode, if the real-time bearing temperature exceeds the second temperature threshold or the fault of the traction motor occurs; and limiting the highest travel speed as a third speed threshold and controlling the inverter and the cooling fan to be in the traction motor protection mode, if the real-time bearing temperature exceeds the second temperature threshold and the fault of the traction motor occurs. In the traction motor protection mode, the inverter is in a no-torque output state and the cooling fan is in a high speed cooling mode to protect the traction motor, and the first speed threshold is greater than the second speed threshold and the second speed threshold is greater than the third speed threshold.

In an embodiment, the method further includes: generating fault codes and sending the fault codes via a preset path, in the case where the bearing temperature sensor is in the failure state.

In an embodiment, the method further includes: determining whether the real-time bearing temperature before the fault codes are acquired exceeds the first temperature threshold; and limiting the highest travel speed as the second speed threshold and controlling the inverter and the cooling fan to be in the traction motor protection mode, if the real-time bearing temperature before the fault codes are acquired exceeds the first temperature threshold.

In an embodiment, the method further includes: determining whether the real-time bearing temperature before the fault codes are acquired exceeds the second temperature threshold; and limiting the highest travel speed as the third speed threshold and controlling the inverter and the cooling fan to be in the traction motor protection mode, if the real-time bearing temperature before the fault codes are acquired exceeds the second temperature threshold.

In an embodiment, the method further includes: determining whether the fault of the traction motor occurs, in the case where the fault codes are acquired; and limiting the highest travel speed as the third speed threshold and controlling the inverter and the cooling fan to be in the traction motor protection mode if the fault of the traction motor occurs.

In an embodiment, the method further includes: determining whether a speed difference between an actual travel speed of the train and the first speed threshold exceeds a difference threshold, in the case where the highest travel speed is limited as the first speed threshold; and applying full braking to the train after a preset time interval if the speed difference exceeds the difference threshold.

In an embodiment, the method further includes: determining whether a speed difference between the actual travel speed of the train and the second speed threshold exceeds the difference threshold in the case where the highest travel speed is limited as the second speed threshold, or determining whether a speed difference between the actual travel speed of the train and the third speed threshold exceeds the difference threshold in the case where the highest travel speed is limited as the third speed threshold; and applying full braking to the train immediately if either of the speed differences exceeds the difference threshold.

A monitoring and alarming control system for a traction motor bearing temperature is further provided according to the present disclosure. The system includes: a bearing temperature and fault information acquiring unit, a first fault determining unit, a second fault determining unit, a first processing unit, a second processing unit and a third processing unit.

The bearing temperature and fault information acquiring unit is configured to acquire a real-time bearing temperature of a traction motor installed on a train from a bearing temperature sensor of the traction motor and to detect a fault of the traction motor, where the fault includes bearing speed sensor fault and a grounding fault of the traction motor.

The first fault determining unit is configured to determine whether the real-time bearing temperature exceeds a first temperature threshold in the case of determining that the bearing temperature sensor is not in a failure state.

The second fault determining unit is configured to determine whether the real-time bearing temperature exceeds a second temperature threshold or whether the fault of the traction motor occurs, if the real-time bearing temperature exceeds the first temperature threshold.

The first processing unit is configured to limit a highest travel speed of the train as a first speed threshold and control both an inverter of a traction converter in the traction motor and a cooling fan in the traction motor to be in a traction motor protection mode, if the real-time bearing temperature does not exceed the second temperature threshold and the fault of the traction motor does not occur.

The second processing unit is configured to limit the highest travel speed as a second speed threshold and control the inverter and the cooling fan to be in the traction motor protection mode, if the real-time bearing temperature exceeds the second temperature threshold or the fault of the traction motor occurs.

The third processing unit is configured to limit the highest travel speed as a third speed threshold and control the inverter and the cooling fan to be in the traction motor protection mode, if the real-time bearing temperature exceeds the second temperature threshold and the fault of the traction motor occurs.

In the traction motor protection mode, the inverter is in a no-torque output state and the cooling fan is in a high speed cooling mode to protect the traction motor, and the first speed threshold is greater than the second speed threshold and the second speed threshold is greater than the third speed threshold.

A monitoring and alarming control device for a traction motor bearing temperature is further provided according to the present disclosure. The device includes: a memory, configured to store a computer program; and a processor, configured to execute the computer program to perform steps of the monitoring and alarming control method for the traction motor bearing temperature described above.

A computer readable storage medium is further provided according to the present disclosure. A computer program is stored in the computer readable storage medium, and steps of the monitoring and alarming control method for the traction motor bearing temperature as described above are performed when the computer program is executed by a processor.

Apparently, in the method according to the technical solutions of the present disclosure, whether a bearing of the traction motor is in a failure state is determined based on a temperature of the bearing. In addition, an actual state of the bearing of a traction motor can be effectively determined in conjunction with multiple angles and multiple events, based on other determining basis possibly existing when the bearing of the traction motor is in the failure state. Strict fault levels and speed limit standards corresponding to the fault levels are defined based on comprehensive monitoring parameters, thereby ensuring a safe and reliable operation of a train. Moreover, the monitoring and alarming control system and device for the traction motor bearing temperature and the computer readable storage medium are further provided according to the present disclosure, which have the above beneficial effects and beneficial effects are not described herein.

### BRIEF DESCRIPTION OF THE DRAWINGS

The drawings to be used in the description of the embodiments or the conventional technology will be described briefly as follows, so that the technical solutions according to the embodiments of the present disclosure or according to the conventional technology will become clearer. Apparently, the drawings in the following description only illustrate embodiments of the present disclosure. For those skilled in the art, other drawings may be obtained according to these drawings without any creative work.
Figure 1 is a flowchart of a monitoring and alarming control method for a traction motor bearing temperature according to an embodiment of the present disclosure;
Figure 2 is a flowchart of a control mode when a bearing temperature sensor is in a failure state in a monitoring and alarming control method for a traction motor bearing temperature according to an embodiment of the present disclosure;
Figure 3 is a flowchart of a processing method when a speed difference is greater than a difference threshold in a monitoring and alarming control method for a traction motor bearing temperature according to an embodiment of the present disclosure;
Figure 4 is a structural block diagram of a monitoring and alarming control system for a traction motor bearing temperature according to an embodiment of the present disclosure; and
Figure 5 is a schematic diagram showing alarm diagnostic logic of an actual monitoring and alarming control system for a traction motor bearing temperature according to an embodiment of the present disclosure.

### DETAILED DESCRIPTION OF EMBODIMENTS

A monitoring and alarming control method, system and device for a traction motor bearing temperature, and a computer readable storage medium are provided according to the present disclosure. In the method, whether a bearing of the traction motor is in a failure state is determined based on a temperature of the bearing. In addition, an actual state of the bearing of a traction motor can be effectively determined in conjunction with multiple angles and multiple events, based on other determining basis possibly existing when the bearing of the traction motor is in the failure state. Strict fault levels and speed limit standards corresponding to the fault levels are defined based on comprehensive monitoring parameters, thereby ensuring a safe and reliable operation of a train.

In order to make the objectives, technical solutions and advantages of the embodiments of the present disclosure clearer, hereinafter, the technical solutions in the embodiments of the present disclosure are described clearly and completely in conjunction with the drawings in the embodiments of the present disclosure. Apparently, the described embodiments are only a part rather than all of the embodiments of the present disclosure. Any other embodiments obtained by those skilled in the art based on the embodiments of the present disclosure without any creative work will fall within the scope of protection of the present disclosure.

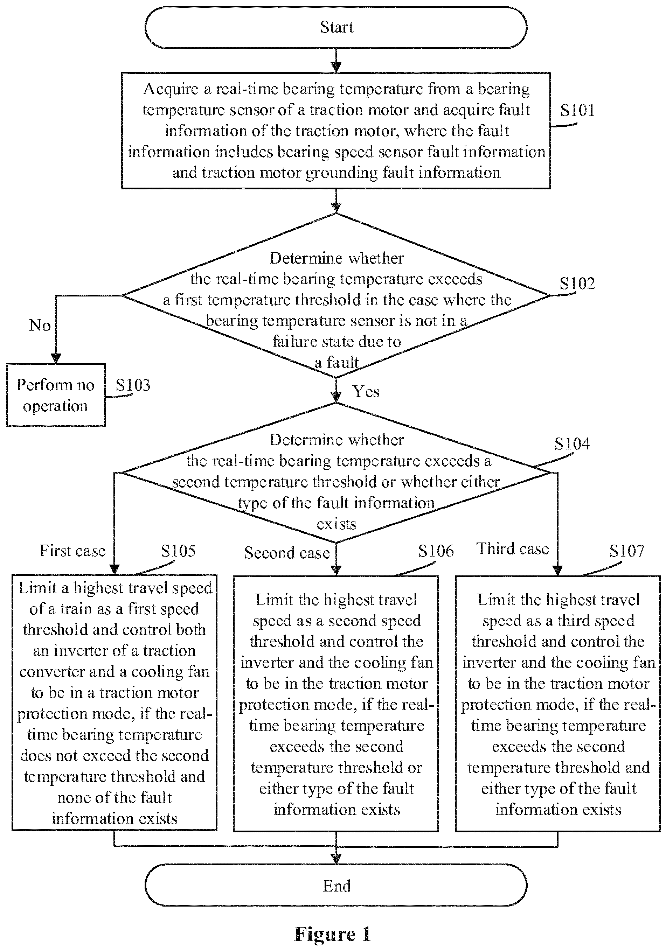

Reference is made to Figure 1, which is a flowchart of a monitoring and alarming control method for a traction motor bearing temperature according to an embodiment of the present disclosure.

The method includes steps S101 to S107.

In step 101, a real-time bearing temperature is acquired from a bearing temperature sensor of a traction motor and fault information of the traction motor is acquired. The fault information includes bearing speed sensor fault information and traction motor grounding fault information.

Two bearings, a drive end bearing (connected to a side of a gearbox) and a non-drive end bearing, are arranged in the traction motor, to support a high speed rotation of a rotor. The two bearings are both in a high speed rotating state during a travel of a train, no matter whether a traction force is outputted. Temperature sensors are respectively arranged near the drive end bearing and the non-drive end bearing, to monitor temperatures of the two bearings of the traction motor. A Hall-type speed sensor is provided at a tail end of the traction motor, for measuring a rotating speed of the traction motor. Generally, when the bearing of the traction motor is damaged, the temperature of the bearing may sharply increase, and a stator of the traction motor may rotate eccentrically with the damage aggregating. In this case, the following two problems may be caused. A grounding fault of the traction motor is caused by a contact between the stator and the rotor, and a speed sensor fault is caused by a contact between the speed sensor and a speed measuring gear. In addition, the temperature sensor for measuring the bearing temperature may become abnormal due to various factors, and cannot feed back the actual bearing temperature of the traction motor. In addition, the bearing temperature is an important parameter for estimating a fault state of the traction motor. Therefore, if an effective bearing temperature parameter cannot be acquired, it may be considered according to an actual situation that the traction motor is faulty and even in a worst state since it is difficult to achieve an accurate estimation.

Practically, information which can be fed back in a case of a fault of the traction motor may be increased appropriately due to arranged different function elements, or may serves as a fault feedback parameter of a traction motor of a corresponding type, which is not limited herein and can be analyzed and selected as needed.

Based on the above descriptions, events related to traction motor bearing fault monitoring may be summarized as fault occurring events by examples below.

Event 1, it is detected that a temperature sensor for measuring the bearing temperature is in a failure state.

Event 2, the temperature sensor is normal and a measured real-time bearing temperature exceeds a set first temperature threshold.

Event 3, the temperature sensor is normal and a measured real-time bearing temperature exceeds both a set second temperature threshold and the set first temperature threshold, and the first temperature threshold is less than the second temperature threshold.

Event 4, a traction motor grounding fault is caused by a contact between a rotor and a stator, or a speed sensor fault is caused by a contact between a speed sensor and a speed measuring gear.

After event 1 occurs, it means that no temperature monitoring will be performed on the bearing. If event 2 and event 3 occur, it means that the bearing has a slight abnormality due to the abnormally increasing temperature. If event 4 occurs, the damage of the bearing may cause a secondary event and it means that the a serious structural damage occurs in the bearing. The set first temperature threshold and the set second temperature threshold may be two representative temperatures. Under these temperatures, an abnormality may occur. Practically, more temperature thresholds may be set in a stepped mode according to different actual situations, for accurately reflecting an actual state of the bearing of the traction motor.

The above four events are monitored and diagnosed in real time by a controller. In subsequent steps and embodiments, occurring situations and orders of the four events are reasonably combined to obtain bearing monitoring and alarming levels matching the different situations.

In step S102, it is determined whether the real-time bearing temperature exceeds a first temperature threshold in the case where the bearing temperature sensor is not in a failure state due to a fault.

Based on step S101, if the bearing temperature sensor is not in the failure state, the step is performed to compare the measured real-time bearing temperature with the set first temperature threshold to determine whether the real-time bearing temperature exceeds the first temperature threshold.

Practically, in the case that the bearing temperature sensor is in the failure state due to a fault, it is impossible to obtain a trusted real-time bearing temperature. In this case, a fault degree of the traction motor is required to be determined with another determination method which will be described in detail in other embodiments.

In step S103, no operation is performed.

This step is performed if it is determined in step S102 that the real-time bearing temperature is less than the first temperature threshold. That is, no operation is required to be performed, since the real-time bearing temperature less than the first temperature threshold represents that the bearing temperature of the traction motor is normal.

In step S104, it is determined whether the real-time bearing temperature exceeds a second temperature threshold or whether either type of the fault information exists.

This step is performed if it is determined in step S102 that the real-time bearing temperature is greater than the first temperature threshold. In this step, it is determined whether the real-time bearing temperature also exceeds the second temperature threshold, or whether the fault information exists in the case that the real-time bearing temperature is greater than the first temperature threshold. It is mentioned in step S101 that, the fault information includes information on a traction motor grounding fault caused by the contact between the rotor and the stator and information on a speed sensor fault caused by the contact between the speed sensor and the speed measuring gear.

In other words, the following situations may be obtained by the determination in this step. In a first situation, the real-time bearing temperature is greater than the first temperature threshold and less than the second temperature threshold, and none of the fault information exists. In a second situation, the real-time bearing temperature is greater than both the first temperature threshold and the second temperature threshold, and none of the fault information exists. In a third situation, the real-time bearing temperature is greater than the first temperature threshold and less than the second temperature threshold, and either type of the fault information exists. In a fourth situation, the real-time bearing temperature is greater than both the first temperature threshold and the second temperature threshold, and either type of the fault information exists. Different processing ways corresponding to these different situations may be described one by one in subsequent steps.

In step S105, a highest travel speed of a train is limited as a first speed threshold and both an inverter of a traction converter and a cooling fan are controlled to be in a traction motor protection mode, if the real-time bearing temperature does not exceed the second temperature threshold and none of the fault information exists.

The step corresponds to the first situation in step S104. That is, the real-time bearing temperature is greater than the first temperature threshold and less than the second temperature threshold, and none of the fault information exists. Since the bearing temperature senor is effective, the bearing temperature exceeds only the relatively lower first temperature threshold and none of the fault information exists, it is considered that the traction motor in this case has a slight abnormality. In addition, a train control measure corresponding to such slight abnormality is determined. That is, the highest travel speed of the train is limited as the first speed threshold and the inverter in the traction converter and the cooling fan are controlled to be in the traction motor protection mode.

In the traction motor protection mode, the inverter is in a no-torque output state and the cooling fan is in a high speed cooling mode, to protect the traction motor.

In step S106, the highest travel speed is limited as a second speed threshold and the inverter and the cooling fan are controlled to be in the traction motor protection mode, if the real-time bearing temperature exceeds the second temperature threshold or either type of the fault information exists.

The step corresponds to the second and third situations described in step S104. That is, the real-time bearing temperature is greater than both the first temperature threshold and the second temperature threshold and none of the fault information exists; or the real-time bearing temperature is greater than the first temperature threshold and less than the second temperature threshold and either type of the fault information exists.

The bearing temperature sensor is effective. In the second situation, the real-time bearing temperature exceeds the relative higher second temperature threshold. In the third situation, the real-time bearing temperature does not exceed the relative higher second temperature threshold while either type of the fault information exists. Therefore, it is considered that the traction motor in this case has a common abnormality. In addition, a train control measure corresponding to the common abnormality is determined, that is, the highest travel speed of the train is limited as the second speed threshold and the inverter in the traction converter and the cooling fan are controlled to be in the traction motor protection mode. The second speed threshold should be less than the first speed threshold, and a difference between the second speed threshold and the first speed threshold may be flexibly set as needed and is not limited herein.

In step S107, the highest travel speed is limited as a third speed threshold and the inverter and the cooling fan are controlled to be in the traction motor protection mode, if the real-time bearing temperature exceeds the second temperature threshold and either type of the fault information exists.

This step corresponds to the fourth situation described in step S104. That is, the real-time bearing temperature is greater than both the first temperature threshold and the second temperature threshold and either type of the fault information exists. The bearing temperature sensor is effective, and in the second situation, the real-time bearing temperature exceeds the relative higher second temperature threshold and either type of the fault information exists. Therefore, it is considered that the traction motor in this case has a serious abnormality. In addition, a train control measure corresponding to such serious abnormality is determined, that is, the highest travel speed of the train is limited as the third speed threshold and the inverter in the traction converter and the cooling fan are controlled to be in the traction motor protection mode. The third speed threshold should be less than the second speed threshold, and a difference between the third speed threshold and the second speed threshold may be flexibly set as needed and is not limited herein.

Further, a traction motor grounding fault may occur in the three situations included in steps S106 and S107. Therefore, the inverter needs to be blocked in the case of the traction motor grounding fault, and the inverter is still set to be in the no-torque output state in the case of no traction motor grounding fault. The cooling fan of the traction motor generally has only two operation modes, a low speed mode and a high speed mode. It is apparent that the cooling fan in the high speed mode has better effects of cooling down and protection.

Further, in the situations corresponding to steps S105, S106 and S107, the highest travel speed of the train is respectively set as the first speed threshold, the second speed threshold and the third speed threshold. Although the speed thresholds are set, the train is required to be braked at an appropriate time instant to ensure the safety of passengers and the train when the actual travel speed of the train is apparently greater than the set speed threshold, this is because the actual travel speed of the train at a corresponding fault level is unknown.

Based on the above technical solutions, in the monitoring and alarming control method for the traction motor bearing temperature according to the embodiment of the present disclosure, whether a bearing of the traction motor is in a failure state is determined based on a temperature of the bearing. In addition, an actual state of the bearing of a traction motor can be effectively determined in conjunction with multiple angles and multiple events, based on other determining basis possibly existing when the bearing of the traction motor is in the failure state. Strict fault levels and speed limit standards corresponding to the fault levels are defined based on comprehensive monitoring parameters, thereby ensuring a safe and reliable operation of a train.

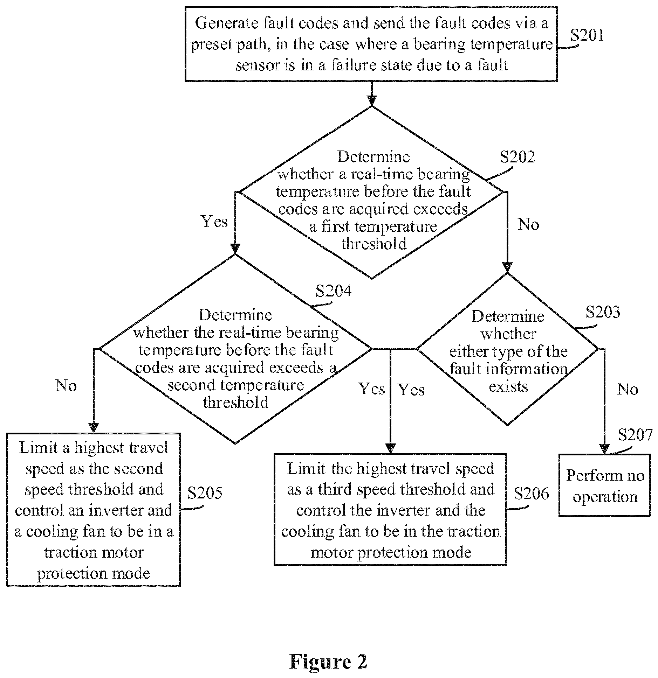

Reference is made to Figure 2, which is a flowchart of a control mode when a bearing temperature sensor is in a failure state in a monitoring and alarming control method for a traction motor bearing temperature according to an embodiment of the present disclosure.

The control mode includes steps S201 to S207.

In step S201, fault codes are generated and sent via a preset path, in the case where the bearing temperature sensor is in a failure state due to a fault.

The fault codes generated and sent in this step are intended to remind and indicate that the bearing temperature sensor is already in the failure state. Sometimes, a flashing fault of the bearing temperature sensor may be caused due to interference, and the bearing temperature sensor may restore to a normal state within a short period. In this case, the generated fault codes can be cleared.

In step S202, it is determined whether the real-time bearing temperature before the fault codes are acquired exceeds the first temperature threshold.

In step S203, it is determined whether either type of the fault information exists.

If the determination result in step S202 is that the real-time bearing temperature before the fault codes are acquired exceeds the first temperature threshold, step S203 is performed to determine whether either type of the fault information further exists in the case where it is known at the beginning that the bearing temperature sensor is in a failure state due to a fault.

In step S204, it is determined whether the real-time bearing temperature before the fault codes are acquired exceeds the second temperature threshold.

If it is determined in step S202 that the real-time bearing temperature before the fault codes are acquired exceeds the first temperature threshold, step 204 is performed to determine whether the real-time bearing temperature before the fault codes are acquired exceeds the second temperature threshold representing a higher temperature.

In step S205, the highest travel speed is limited as the second speed threshold and the inverter and the cooling fan are controlled to be in the traction motor protection mode.

If it is determined in step S204 that the real-time bearing temperature before the fault codes are acquired exceeds the first temperature threshold and does not exceed the second temperature threshold, that is, the real-time bearing temperature is obtained via the normal bearing temperature sensor and only exceeds the first temperature threshold and does not exceed the second temperature threshold, step S205 is performed. The fault codes reflecting the failure of the bearing temperature sensor are received in a subsequent process.

This case also corresponds to the common abnormality level. Hence, the highest travel speed is limited as the second speed threshold and the inverter and the cooling fan are controlled to be in the traction motor protection mode. For related contents, one may refer to the control measure matching the common abnormality level described in step S106.

In step S206, the highest travel speed is limited as the third speed threshold and the inverter and the cooling fan are controlled to be in the traction motor protection mode.

The step is performed in the following two cases. In a first case, it is determined in step S204 that the real-time bearing temperature before the fault codes are acquired exceeds both the first temperature threshold and the second temperature threshold. That is, the real-time bearing temperature is obtained via a normal bearing temperature sensor and the real-time bearing temperature exceeds both the first temperature threshold and the second temperature threshold. The fault codes reflecting the failure of the bearing temperature sensor are received in a subsequent process. In a second case, it is determined in step S203 that either type of the fault information exists in the case that the bearing temperature sensor is in a failure state due to a fault at the beginning.

The first case should correspond to the serious abnormality level. In the second case, it is difficult to measure a trusted real-time bearing temperature in the case of a failure and it is difficult to perform a relatively rigorous state analysis. In this case, if either type of the fault information exists, the second case should be also determined as the serious abnormality level, and the control measure matching the serious abnormality level should be adopted. That is, the highest travel speed is limited as the third speed threshold and the inverter and the cooling fan are controlled to be in the traction motor protection mode. For related contents, one may refer to the control measure matching the serious abnormality level in step S107.

In step S207, no operation is performed.

If it is determined in step S203 that the real-time bearing temperature before the fault codes are acquired does not exceed the first temperature threshold, that is, the real-time bearing temperature is obtained via a normal bearing temperature sensor and the real-time bearing temperature does not exceed the first temperature threshold, step S207 is performed. The fault codes reflecting the failure of the bearing temperature sensor are received in a subsequent process. No operation is required to be performed since the obtained real-time bearing temperature does not exceed the first temperature threshold.

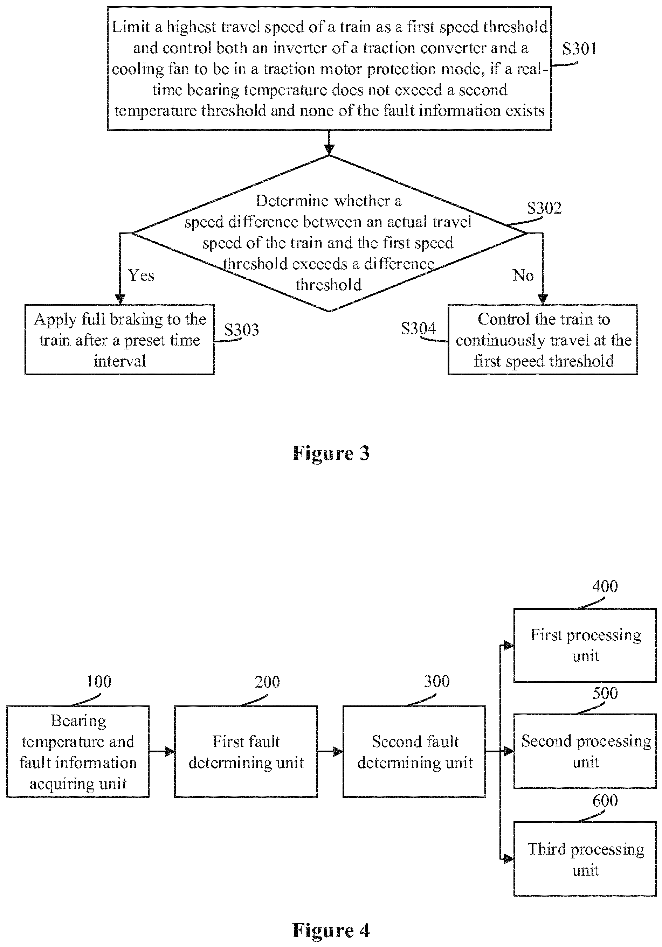

Reference is made to Figure 3, which is a flowchart of a processing method when a speed difference is greater than a difference threshold in a monitoring and alarming control method for a traction motor bearing temperature according to an embodiment of the present disclosure.

The processing method includes step S301 to S304.

In step S301, a highest travel speed of a train is limited as a first speed threshold and both an inverter of a traction converter and a cooling fan are controlled to be in a traction motor protection mode, if the real-time bearing temperature does not exceed the second temperature threshold and none of the fault information exists.

In step S302, it is determined whether a speed difference between an actual travel speed of the train and the first speed threshold exceeds a difference threshold.

In step S303, full braking is applied to the train after a preset time interval.

The step is performed if it is determined in step S302 that the speed difference exceeds the difference threshold, to apply the full braking to the train after the preset time interval.

In step S304, the train is controlled to continuously travel at the first speed threshold.

The step is performed if it is determined in step S302 that the speed difference does not exceed the difference threshold, to directly control the train to continuously travel at the first speed threshold.

Further, another similar scenario is as follows.

It is determined whether a speed difference between the actual travel speed of the train and the second speed threshold exceeds the difference threshold in a case that the highest travel speed is limited as the second speed threshold or it is determined whether a speed difference between the actual travel speed of the train and the third speed threshold exceeds the difference threshold in a case that the highest travel speed is limited as the third speed threshold. Full braking is applied to the train immediately if either of the speed differences exceeds the difference threshold. An abnormality at the common abnormality level and an abnormality at the serious abnormality level may be relatively serious. In this case, the full braking is directly applied to the train, which is different from the case for a slight abnormality, i.e., the full braking is applied to the train after the preset time interval.

The preset time interval may be flexibly set as needed, and is not limited herein.

Based on the above technical solutions, in the monitoring and alarming control method for the traction motor bearing temperature according to the embodiments of the present disclosure, whether a bearing of the traction motor is in a failure state is determined based on a temperature of the bearing. In addition, an actual state of the bearing of a traction motor can be effectively determined in conjunction with multiple angles and multiple events, based on other determining basis possibly existing when the bearing of the traction motor is in the failure state. Strict fault levels and speed limit standards corresponding to the fault levels are defined based on comprehensive monitoring parameters, thereby ensuring a safe and reliable operation of a train.

Situations cannot be described one by one due to their complexities. It can be appreciated by those skilled in the art that, many examples may be obtained by combining the basic method principle according to the present disclosure and actual situations, and these examples obtained without enough creative work all fall within the scope of protection of the present disclosure.

Reference is made to Figure 4, which is a structural block diagram of a monitoring and alarming control system for a traction motor bearing temperature according to an embodiment of the present disclosure.

The system may include a bearing temperature and fault information acquiring unit 100, a first fault determining unit 200, a second fault determining unit 300, a first processing unit 400, a second processing unit 500 and a third processing unit 600.

The bearing temperature and fault information acquiring unit 100 is configured to acquire a real-time bearing temperature from a bearing temperature sensor of a traction motor and acquire fault information of the traction motor. The fault information includes bearing speed sensor fault information and traction motor grounding fault information.

The first fault determining unit 200 is configured to determine whether the real-time bearing temperature exceeds a first temperature threshold in the case where the bearing temperature sensor is not in a failure state due to a fault.

The second fault determining unit 300 is configured to determine whether the real-time bearing temperature exceeds a second temperature threshold or whether either type of the fault information exists, if the real-time bearing temperature exceeds the first temperature threshold.

The first processing unit 400 is configured to limit a highest travel speed of a train as a first speed threshold and control both an inverter of a traction converter and a cooling fan to be in a traction motor protection mode, if the real-time bearing temperature does not exceed the second temperature threshold and none of the fault information exists.

The second processing unit 500 is configured to limit the highest travel speed as a second speed threshold and control the inverter and the cooling fan to be in the traction motor protection mode, if the real-time bearing temperature exceeds the second temperature threshold or either type of the fault information exists.

The third processing unit 600 is configured to limit the highest travel speed as a third speed threshold and control the inverter and the cooling fan to be in the traction motor protection mode, if the real-time bearing temperature exceeds the second temperature threshold and either type of the fault information exists.

In the traction motor protection mode, the inverter is in a no-torque output state and the cooling fan is in a high speed cooling mode to protect the traction motor, and the first speed threshold is greater than the second speed threshold and the second speed threshold is greater than the third speed threshold.

The above units can be applied to the following actual example.

The occurring situations and order of the above four events are reasonably combined, and nine cases and three levels of alarms can be obtained. The embodiment is as follows.

Level 0: alarm of a zero level.

Case M1: a bearing temperature sensor is in a failure state.

Train response: only diagnostic codes are generated.

Level 1: alarm of a first level.

Case M2: an event, T>120 Celsius degrees, is directly detected by the train without a fault diagnosis related to a traction bearing monitoring.

Train response: a speed limit is 200 kilometers per hour, full braking is automatically applied to the train after 300 seconds if the speed of the train is excessively high; an inverter operates in a no-torque output state and a cooling fan of the motor is forced to operate in a high speed cooling mode.

Level 2: alarm of a second level.

There are totally three cases in which the alarm of the second level can be generated. The three cases include case M3, case M4 and case M5.

In case M3, after it is monitored that the bearing temperature T is higher than 120 Celsius degrees, the bearing temperature sensor is in a failure state again. It is indicated that the bearing temperature is abnormal and a condition for the alarm of the first level is met. In addition, the bearing temperature cannot be monitored continuously and the level of the alarm is required to be further upgraded to the second level.

In case M4, after it is monitored that the bearing temperature T is higher than 120 Celsius degrees, the tractor motor grounding fault or a motor speed sensor fault occurs. It is indicated that the bearing temperature is abnormal and the condition for the alarm of the first level is met. Moreover, the structure of the motor may be damaged to a certain extent, which causes the stator of the traction motor to rotate eccentrically. In this case, the rotor may contact the stator or the speed sensor may contact a speed measuring gear, hence the level of the alarm is required to be further upgraded to the second level.

In case M5, in a case of no fault diagnosis related to a traction bearing monitoring for the train, after it is monitored that the bearing temperature T is higher than 120 Celsius degrees, the temperature continuously increases and reaches a value greater than 140 Celsius degrees.

The alarm of the second level can be generated once any of the above three cases occurs.

Train response: a speed limit is 140 kilometers per hour, full braking is automatically applied to the train immediately if the speed of the train is excessively high; an inverter operates in a no-torque output state in other cases if a motor grounding inverter is blocked, and a cooling fan of the motor is forced to operate in a high speed cooling mode.

Level 3: alarm of a third level.

There are totally four cases in which the alarm of the third level of the train can be generated. The four cases includes case M6, case M7, case M8 and case M9.

In case M6, in a case that that case M4 occurs, the bearing temperature T of the traction motor further increases and reaches a value greater than 140 Celsius degrees. It is indicated that a damage of the bearing is aggravated, and hence the level of the alarm is required to be further upgraded to the third level.

In case M7, after it is monitored that the bearing temperature T is higher than 140 Celsius degrees, the bearing temperature sensor is in a failure state again. It is indicated that the bearing temperature is abnormal and a condition for the alarm of the second level is met. In addition, the bearing temperature cannot be monitored continuously and the level of the alarm is required to be further upgraded to the third level.

In case M8, after it is monitored that the bearing temperature T is higher than 140 Celsius degrees, the traction motor grounding fault or the motor speed sensor fault occurs again. It is indicated that the bearing temperature is abnormal and the condition for the alarm of the second level is met. Moreover, the structure of the motor may be damaged to a certain extent, which causes the stator of the traction motor to rotate eccentrically. In this case, the rotor may contact the stator or the speed sensor may contact a speed measuring gear, hence the level of the alarm is required to be further upgraded to the third level.

In Case M9, after a failure of a bearing temperature sensor is detected, a traction motor grounding fault or a motor speed sensor fault is further detected. It is indicated that the structure of the bearing may be damaged to a certain extent in the case that the bearing temperature cannot be monitored. An alarm of the third level is required to be generated and a high vigilance is required.

An alarm of the third level may be generated once any of the above four cases occurs.

Train response: a speed limit is 40 kilometers per hour, full braking is automatically applied to the train immediately if the speed of the train is excessively high; an inverter operates in a no-torque output state in other cases if a motor grounding inverter is blocked, and a cooling fan of the motor is forced to operate in a high speed cooling mode.

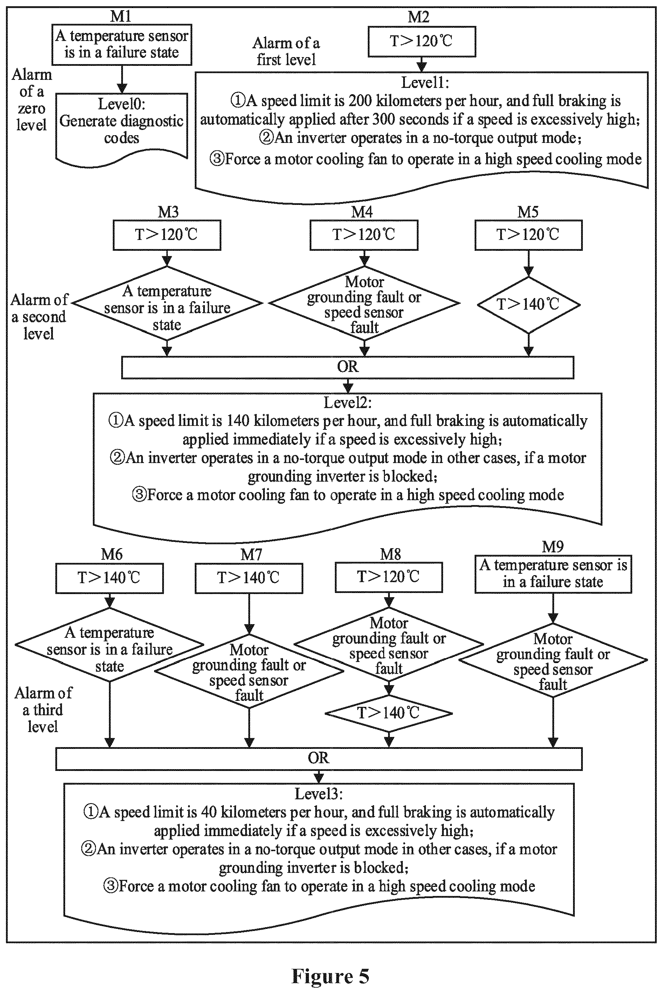

Based on the above nine cases, alarm levels for the traction motor bearing monitoring can be summarized, as shown in Table 1 which corresponds to a schematic diagram of diagnose logic shown in Figure 5.

**Table 1 Alarm level table for traction motor bearing monitoring**

| Cases | Developments of events | Train responses | Alarm levels |
|---|---|---|---|
| M1 | Current state: no fault diagnosis related to a traction bearing monitoring | Diagnostic codes are generated, and the codes are automatically reset if a signal of the sensor is re-effective. | Level 0: zero level |
| | Event: a bearing temperature sensor failure. | | No speed limit |
| M2 | Current state: no fault diagnosis related to a traction bearing monitoring | I, a speed limit is 200 kilometers per hour, and full braking is automatically applied after 300 seconds if a speed is excessively high; | Level 1: first level |
| | Event: T is higher than 120 Celsius degrees. | | Vmax=200km/h |
| | | II, an inverter operates in a no-torque output mode; and | |
| | | III, a motor cooling fan is forced to operate in a high speed cooling mode. | |
| M3 | Current state: a bearing temperature T is higher than 120 Celsius degrees. | I, a speed limit is 140 kilometers per hour, and full braking is automatically applied immediately if the speed is excessively high; | Level 2: second level |
| | Event: a bearing temperature sensor failure | | Vmax =140km/h |
| M4 | Current state: a bearing temperature T is higher than 120 Celsius degrees. | II, an inverter operates in a no-torque output mode in other cases, if a motor grounding inverter is blocked; and | |
| | Event: a traction motor grounding failure or a motor speed sensor failure | | |
| M5 | Current state: no fault diagnosis related to a traction bearing monitoring | III, a motor cooling fan is forced to operate in a high speed cooling mode. | |
| | Event: T is higher than 140 Celsius degrees. | | |
| M6 | Current state: a bearing temperature T is higher than 120 Celsius degrees. | I, a speed limit is 40 kilometers per hour, and full braking is automatically applied immediately if the speed is excessively high; | Level 3: third level |
| | Event 1: a traction motor grounding failure or a motor speed sensor failure; | | |
| | | | Vmax =40 km/h |
| | Event 2: T is higher than 140 Celsius degrees. | II, an inverter operates in a no-torque output mode in other cases, if a motor grounding inverter is blocked; and | |
| M7 | Current state: a bearing temperature T is higher than 140 Celsius degrees. | | |
| | Event: a bearing temperature sensor failure. | III, a motor cooling fan is forced to operate in a high speed cooling mode. | |
| M8 | Current state: a bearing temperature T is higher than 140 Celsius degrees. | | |
| | Event 1: a traction motor grounding failure or a motor speed sensor failure. | | |
| M9 | Current state: a bearing temperature sensor failure. | | |
| | Event: a traction motor grounding failure or a motor speed sensor failure. | | |

Based on the above embodiment, a monitoring and alarming control device for a traction motor bearing temperature is further provided according to the present disclosure. The device may include a memory and a processor. A computer program is stored in the memory, and the processor is configured to perform the steps of the above embodiment when calling the computer program in the memory. Practically, the device may further include various necessary network interfaces, power sources, other components and parts, and the like.

A computer readable storage medium is further provided according to the present disclosure, in which a computer program is stored. The steps in the above embodiment can be performed when the computer program is executed by an executing terminal or a processor. The storage medium may include various medium capable of storing program codes, such as a U disk, a removable hard disk, a Read-Only Memory (ROM), a Random Access Memory (RAM), a magnetic disk or an optical disk.

The embodiments in this specification are described in a progressive way, each of which emphasizes the differences from others, and the same or similar parts among the embodiments can be referred to each other. Since the device disclosed in the embodiments corresponds to the method disclosed in the embodiments, the description thereof is relatively simple, and for relevant matters, one may refer to the description of the method embodiments.

It may be further known by those skilled in the art that, units and steps in each example described in conjunction with the embodiments disclosed herein can be realized by electronic hardware, computer software or a combination thereof. In order to clearly illustrate interchangeability of the hardware and the software, composition and steps of each example have been described generally in view of functions in the above specification. Whether the function is executed in a hardware way or in a software way depends on applications of the technical solution and design constraint conditions. Those skilled in the art can use a different method for each application to realize the described function, and the implementation is not considered to go beyond the scope of the present disclosure.

The principle and the embodiments of the present disclosure are illustrated herein by specific examples. The above description of embodiments is only intended to help the understanding of the method and core concept of the present disclosure. It should be noted that, various improvements and modifications can be made to the present disclosure by those skilled in the art without departing from the principle of the present disclosure, and these improvements and modifications all fall within the scope of protection of the claims of the present disclosure.

It should be further noted that, the relationship terminologies such as "first", "second" and the like in the specification are only used to distinguish one entity or operation from another, rather than to necessitate or imply that the actual relationship or order exists between the entities or operations. Furthermore, terms of "include", "comprise" or any other variants are intended to be non-exclusive. Therefore, a process, method, article or device including a plurality of elements includes not only the elements but also other elements that are not enumerated, or also include the elements inherent for the process, method, article or device. Unless expressively limited otherwise, the statement "comprising (including) one..." does not exclude the case that other similar elements may exist in the process, method, article or device.

## Claims

1. A monitoring and alarming control method for a traction motor bearing temperature, comprising:
acquiring a real-time bearing temperature of a traction motor installed on a train from a bearing temperature sensor of the traction motor and detecting a fault of the traction motor (S101), wherein the fault comprises bearing speed sensor fault and a grounding fault of the traction motor;
determining whether the real-time bearing temperature exceeds a first temperature threshold in the case of determining that the bearing temperature sensor is not in a failure state (S102);
determining whether the real-time bearing temperature exceeds a second temperature threshold or whether the fault of the traction motor occurs, if the real-time bearing temperature exceeds the first temperature threshold (S104);
**characterised by** limiting a highest travel speed of the train as a first speed threshold and controlling both an inverter of a traction converter in the traction motor and a cooling fan in the traction motor to be in a traction motor protection mode, if the real-time bearing temperature does not exceed the second temperature threshold and the fault of the traction motor does not occur (S105);
limiting the highest travel speed as a second speed threshold and controlling the inverter and the cooling fan to be in the traction motor protection mode, if the real-time bearing temperature exceeds the second temperature threshold or the fault of the traction motor occurs (S106); and
limiting the highest travel speed as a third speed threshold and controlling the inverter and the cooling fan to be in the traction motor protection mode, if the real-time bearing temperature exceeds the second temperature threshold and the fault of the traction motor occurs (S107),
wherein in the traction motor protection mode, the inverter is in a no-torque output state and the cooling fan is in a high speed cooling mode to protect the traction motor, and the first speed threshold is greater than the second speed threshold and the second speed threshold is greater than the third speed threshold.

2. The method according to claim 1, further comprising:
generating fault codes and sending the fault codes via a preset path, in the case where the bearing temperature sensor is in the failure state (S201).

3. The method according to claim 2, further comprising:
determining whether the real-time bearing temperature before the fault codes are acquired exceeds the first temperature threshold (S202); and
limiting the highest travel speed as the second speed threshold and controlling the inverter and the cooling fan to be in the traction motor protection mode (S205), if the real-time bearing temperature before the fault codes are acquired exceeds the first temperature threshold.

4. The method according to claim 2, further comprising:
determining whether the real-time bearing temperature before the fault codes are acquired exceeds the second temperature threshold (S204); and
limiting the highest travel speed as the third speed threshold and controlling the inverter and the cooling fan to be in the traction motor protection mode (S206), if the real-time bearing temperature before the fault codes are acquired exceeds the second temperature threshold.

5. The method according to claim 2, further comprising:
determining whether the fault of the traction motor occurs, in the case where the fault codes are acquired (S203); and
limiting the highest travel speed as the third speed threshold and controlling the inverter and the cooling fan to be in the traction motor protection mode (S206), if the fault of the traction motor occurs.

6. The method according to any one of claims 1 to 5, further comprising:
determining whether a speed difference between an actual travel speed of the train and the first speed threshold exceeds a difference threshold (S302), in the case where the highest travel speed is limited as the first speed threshold; and
applying full braking to the train after a preset time interval if the speed difference exceeds the difference threshold (S303).

7. The method according to claim 6, further comprising:
determining whether a speed difference between the actual travel speed of the train and the second speed threshold exceeds the difference threshold in the case where the highest travel speed is limited as the second speed threshold, or determining whether a speed difference between the actual travel speed of the train and the third speed threshold exceeds the difference threshold in the case where the highest travel speed is limited as the third speed threshold; and
applying full braking to the train immediately if either of the speed differences exceeds the difference threshold (S303).

8. A monitoring and alarming control system for a traction motor bearing temperature, comprising:
a bearing temperature and fault information acquiring unit (100), configured to acquire a real-time bearing temperature of a traction motor installed on a train from a bearing temperature sensor of the traction motor and to detect a fault of the traction motor, wherein the fault comprises bearing speed sensor fault and a grounding fault of the traction motor;
a first fault determining unit (200), configured to determine whether the real-time bearing temperature exceeds a first temperature threshold, in the case of determining that the bearing temperature sensor is not in a failure state;
a second fault determining unit (300), configured to determine whether the real-time bearing temperature exceeds a second temperature threshold or whether the fault of the traction motor occurs, if the real-time bearing temperature exceeds the first temperature threshold;
**characterised by** a first processing unit (400), configured to limit a highest travel speed of the train as a first speed threshold and control both an inverter of a traction converter in the traction motor and a cooling fan in the traction motor to be in a traction motor protection mode, if the real-time bearing temperature does not exceed the second temperature threshold and the fault of the traction motor does not occur;
a second processing unit (500), configured to limit the highest travel speed as a second speed threshold and control the inverter and the cooling fan to be in the traction motor protection mode, if the real-time bearing temperature exceeds the second temperature threshold or the fault of the traction motor occurs; and
a third processing unit (600), configured to limit the highest travel speed as a third speed threshold and control the inverter and the cooling fan to be in the traction motor protection mode, if the real-time bearing temperature exceeds the second temperature threshold and the fault of the traction motor occurs,
wherein in the traction motor protection mode, the inverter is in a no-torque output state and the cooling fan is in a high speed cooling mode to protect the traction motor, and the first speed threshold is greater than the second speed threshold and the second speed threshold is greater than the third speed threshold.

9. A monitoring and alarming control device for a traction motor bearing temperature, comprising:
a memory, configured to store a computer program; and
a processor, configured to execute the computer program to perform steps of the monitoring and alarming control method for the traction motor bearing temperature according to any one of claims 1 to 7.

10. A computer readable storage medium, wherein a computer program is stored in the computer readable storage medium, and steps of the monitoring and alarming control method for the traction motor bearing temperature according to any one of claims 1 to 7 are performed when the computer program is executed by a processor.

## Patentansprüche

1. Überwachungs- und Alarmierungssteuerverfahren für eine Antriebsmotorlagertemperatur, das Folgendes beinhaltet:
Erfassen einer Echtzeit-Lagertemperatur eines in einem Zug installierten Antriebsmotors mittels eines Lagertemperatursensors des Antriebsmotors und Erkennen eines Fehlers des Antriebsmotors (S101), wobei der Fehler einen Fehler des Lagergeschwindigkeitssensors und einen Erdungsfehler des Antriebsmotors umfasst;
Feststellen, ob die Echtzeit-Lagertemperatur einen ersten Temperaturschwellenwert überschreitet, wenn festgestellt wird, dass der Lagertemperatursensor nicht in einem Fehlerzustand ist (S102);
Feststellen, ob die Echtzeit-Lagertemperatur einen zweiten Temperaturschwellenwert überschreitet oder ob der Fehler des Antriebsmotors auftritt, wenn die Echtzeit-Lagertemperatur den ersten Temperaturschwellenwert überschreitet (S104);
**gekennzeichnet durch** Begrenzen einer höchsten Fahrgeschwindigkeit des Zugs als ersten Geschwindigkeitsschwellenwert und Steuern sowohl eines Wechselrichters eines Antriebsumrichters im Antriebsmotor als auch eines Kühlgebläses im Antriebsmotor, so dass sie in einem Antriebsmotorschutzmodus sind, wenn die Echtzeit-Lagertemperatur den zweiten Temperaturschwellenwert nicht überschreitet und der Fehler des Antriebsmotors nicht auftritt (S105);
Begrenzen der höchsten Fahrgeschwindigkeit als zweiten Geschwindigkeitsschwellenwert und Steuern des Wechselrichters und des Kühlgebläses, so dass sie im Antriebsmotorschutzmodus sind, wenn die Echtzeit-Lagertemperatur den zweiten Temperaturschwellenwert überschreitet oder der Fehler des Antriebsmotors auftritt (S106); und
Begrenzen der höchsten Fahrgeschwindigkeit als dritten Geschwindigkeitsschwellenwert und Steuern des Wechselrichters und des Kühlgebläses, so dass sie im Antriebsmotorschutzmodus sind, wenn die Echtzeit-Lagertemperatur den zweiten Temperaturschwellenwert überschreitet und der Fehler des Antriebsmotors auftritt (S107),
wobei der Wechselrichter im Antriebsmotorschutzmodus in einem drehmomentfreien Ausgangszustand und der Lüfter in einem Schnellkühlmodus ist, um den Antriebsmotor zu schützen, und der erste Geschwindigkeitsschwellenwert größer als der zweite Geschwindigkeitsschwellenwert und der zweite Geschwindigkeitsschwellenwert größer als der dritte Geschwindigkeitsschwellenwert ist.

2. Verfahren nach Anspruch 1, das ferner Folgendes beinhaltet:
Erzeugen von Fehlercodes und Senden der Fehlercodes über einen voreingestellten Pfad, falls der Lagertemperatursensor im Fehlerzustand ist (S201).

3. Verfahren nach Anspruch 2, das ferner Folgendes beinhaltet:
Feststellen, ob die Echtzeit-Lagertemperatur vor dem Erfassen der Fehlercodes den ersten Temperaturschwellenwert überschreitet (S202); und
Begrenzen der höchsten Fahrgeschwindigkeit als zweiten Geschwindigkeitsschwellenwert und Steuern des Wechselrichters und des Kühlgebläses, so dass sie im Antriebsmotorschutzmodus sind (S205), wenn die Echtzeit-Lagertemperatur vor dem Erfassen der Fehlercodes den ersten Temperaturschwellenwert überschreitet.

4. Verfahren nach Anspruch 2, das ferner Folgendes beinhaltet:
Feststellen, ob die Echtzeit-Lagertemperatur vor dem Erfassen der Fehlercodes den zweiten Temperaturschwellenwert überschreitet (S204); und
Begrenzen der höchsten Fahrgeschwindigkeit als dritten Geschwindigkeitsschwellenwert und Steuern des Wechselrichters und des Kühlgebläses, so dass sie im Antriebsmotorschutzmodus sind (S206), wenn die Echtzeit-Lagertemperatur vor dem Erfassen der Fehlercodes den zweiten Temperaturschwellenwert überschreitet.

5. Verfahren nach Anspruch 2, das ferner Folgendes beinhaltet:
Feststellen, ob der Fehler des Antriebsmotors auftritt, falls die Fehlercodes erfasst werden (S203); und
Begrenzen der höchsten Fahrgeschwindigkeit als dritten Geschwindigkeitsschwellenwert und Steuern des Wechselrichters und des Kühlgebläses, so dass sie im Antriebsmotorschutzmodus sind (S206), wenn der Fehler des Antriebsmotors auftritt.

6. Verfahren nach einem der Ansprüche 1 bis 5, das ferner Folgendes beinhaltet:
Feststellen, ob eine Geschwindigkeitsdifferenz zwischen einer tatsächlichen Fahrgeschwindigkeit des Zugs und dem ersten Geschwindigkeitsschwellenwert einen Differenzschwellenwert überschreitet (S302), falls die höchste Fahrgeschwindigkeit als erster Geschwindigkeitsschwellenwert begrenzt ist; und
Anwenden einer Vollbremsung auf den Zug nach einem voreingestellten Zeitintervall, wenn die Geschwindigkeitsdifferenz den Differenzschwellenwert überschreitet (S303).

7. Verfahren nach Anspruch 6, das ferner Folgendes beinhaltet:
Feststellen, ob eine Geschwindigkeitsdifferenz zwischen der tatsächlichen Fahrgeschwindigkeit des Zugs und dem zweiten Geschwindigkeitsschwellenwert den Differenzschwellenwert überschreitet, falls die höchste Fahrgeschwindigkeit als zweiter Geschwindigkeitsschwellenwert begrenzt ist, oder Feststellen, ob eine Geschwindigkeitsdifferenz zwischen der tatsächlichen Fahrgeschwindigkeit des Zugs und dem dritten Geschwindigkeitsschwellenwert den Differenzschwellenwert überschreitet, falls die höchste Fahrgeschwindigkeit als dritter Geschwindigkeitsschwellenwert begrenzt ist; und
sofortiges Anwenden einer Vollbremsung des Zugs, wenn eine der Geschwindigkeitsdifferenzen den Differenzschwellenwert überschreitet (S303).

8. Überwachungs- und Alarmierungssteuersystem für eine Antriebsmotorlagertemperatur, das Folgendes umfasst:
eine Lagertemperatur- und Fehlerinformationserfassungseinheit (100), konfiguriert zum Erfassen einer Echtzeit-Lagertemperatur eines in einem Zug installierten Antriebsmotors mittels eines Lagertemperatursensors des Antriebsmotors und zum Erkennen eines Fehlers des Antriebsmotors, wobei der Fehler einen Lagergeschwindigkeitssensorfehler und einen Erdungsfehler des Antriebsmotors umfasst;
eine erste Fehlerbestimmungseinheit (200), konfiguriert zum Feststellen, ob die Echtzeit-Lagertemperatur einen ersten Temperaturschwellenwert überschreitet, falls festgestellt wird, dass der Lagertemperatursensor nicht in einem Fehlerzustand ist;
eine zweite Fehlerbestimmungseinheit (300), konfiguriert zum Feststellen, ob die Echtzeit-Lagertemperatur einen zweiten Temperaturschwellenwert überschreitet oder ob der Fehler des Antriebsmotors auftritt, wenn die Echtzeit-Lagertemperatur den ersten Temperaturschwellenwert überschreitet;
**gekennzeichnet durch**
eine erste Verarbeitungseinheit (400), konfiguriert zum Begrenzen einer höchsten Fahrgeschwindigkeit des Zugs als ersten Geschwindigkeitsschwellenwert und zum Steuern sowohl eines Wechselrichters eines Antriebsumrichters im Antriebsmotor als auch eines Kühlgebläses im Antriebsmotor, so dass sie in einem Antriebsmotorschutzmodus sind, wenn die Echtzeit-Lagertemperatur den zweiten Temperaturschwellenwert nicht überschreitet und der Fehler des Antriebsmotors nicht auftritt;
eine zweite Verarbeitungseinheit (500), konfiguriert zum Begrenzen der höchsten Fahrgeschwindigkeit als zweiten Geschwindigkeitsschwellenwert und zum Steuern des Wechselrichters und des Kühlgebläses, so dass sie im Antriebsmotorschutzmodus sind, wenn die Echtzeit-Lagertemperatur den zweiten Temperaturschwellenwert überschreitet oder der Fehler des Antriebsmotors auftritt; und
eine dritte Verarbeitungseinheit (600), konfiguriert zum Begrenzen der höchsten Fahrgeschwindigkeit als dritten Geschwindigkeitsschwellenwert und zum Steuern des Wechselrichters und des Kühlgebläses, so dass sie im Antriebsmotorschutzmodus sind, wenn die Echtzeit-Lagertemperatur den zweiten Temperaturschwellenwert überschreitet und der Fehler des Antriebsmotors auftritt,
wobei im Antriebsmotorschutzmodus der Wechselrichter in einem drehmomentfreien Ausgangszustand ist und das Kühlgebläse in einem Schnellkühlmodus arbeitet, um den Antriebsmotor zu schützen, und der erste Geschwindigkeitsschwellenwert größer ist als der zweite Geschwindigkeitsschwellenwert und der zweite Geschwindigkeitsschwellenwert größer ist als der dritte Geschwindigkeitsschwellenwert.

9. Überwachungs- und Alarmierungssteuergeät für eine Antriebsmotorlagertemperatur, das Folgendes umfasst:
einen Speicher, konfiguriert zum Speichern eines Computerprogramms; und
einen Prozessor, konfiguriert zum Ausführen des Computerprogramms zum Durchführen von Schritten des Überwachungs- und Alarmierungssteuerverfahrens für die Antriebsmotorlagertemperatur nach einem der Ansprüche 1 bis 7.

10. Computerlesbares Speichermedium, wobei ein Computerprogramm in dem computerlesbaren Speichermedium gespeichert ist und Schritte des Überwachungs- und Alarmierungssteuerverfahrens für die Antriebsmotorlagertemperatur nach einem der Ansprüche 1 bis 7 ausgeführt werden, wenn das Computerprogramm von einem Prozessor ausgeführt wird.

## Revendications

1. Procédé de commande de surveillance et d'alerte relatif à une température d'un roulement de moteur de traction, comprenant :
l'acquisition d'une température de roulement en temps réel d'un moteur de traction installé sur un train à partir d'un capteur de température de roulement du moteur de traction et la détection d'une défaillance du moteur de traction (S101), dans lequel la défaillance comprend une défaillance de capteur de vitesse de roulement et une défaillance de mise à la terre du moteur de traction ;
la détermination que la température de roulement en temps réel dépasse ou non un premier seuil de température dans le cas il est déterminé que le capteur de température de roulement n'est pas dans un état de défaillance (S102) ;
la détermination que la température de roulement en temps réel dépasse ou non un second seuil de température ou que la défaillance du moteur de traction se produit ou non, si la température de roulement en temps réel dépasse le premier seuil de température (S104) ;
**caractérisé par**
la limitation d'une vitesse de déplacement la plus élevée du train à un premier seuil de vitesse et la commande à la fois d'un onduleur d'un convertisseur de traction dans le moteur de traction et d'un ventilateur de refroidissement dans le moteur de traction pour qu'ils soient dans un mode de protection de moteur de traction, si la température de roulement en temps réel ne dépasse pas le second seuil de température et la défaillance du moteur de traction ne se produit pas (S105) ;
la limitation de la vitesse de déplacement la plus élevée à un deuxième seuil de vitesse et la commande de l'onduleur et du ventilateur de refroidissement pour qu'ils soient dans le mode de protection de moteur de traction, si la température de roulement en temps réel dépasse le second seuil de température ou la défaillance du moteur de traction se produit (S106) ; et
la limitation de la vitesse de déplacement la plus élevée à un troisième seuil de vitesse et la commande de l'onduleur et du ventilateur de refroidissement pour qu'ils soient dans le mode de protection de moteur de traction, si la température de roulement en temps réel dépasse le second seuil de température et la défaillance du moteur de traction se produit (S107),
dans lequel dans le mode de protection de moteur de traction, l'onduleur est dans un état de sortie sans couple et le ventilateur de refroidissement est dans un mode de refroidissement à haute vitesse pour protéger le moteur de traction, et le premier seuil de vitesse est supérieur au deuxième seuil de vitesse et le deuxième seuil de vitesse est supérieur au troisième seuil de vitesse.

2. Procédé selon la revendication 1, comprenant en outre :
la génération de codes de défaillance et l'envoi des codes de défaillance via un chemin prédéfini, dans le cas où le capteur de température de roulement est dans l'état de défaillance (S201).

3. Procédé selon la revendication 2, comprenant en outre :
la détermination que la température de roulement en temps réel avant l'acquisition des codes de défaillance dépasse ou non le premier seuil de température (S202) ; et
la limitation de la vitesse de déplacement la plus élevée au deuxième seuil de vitesse et la commande de l'onduleur et du ventilateur de refroidissement pour qu'ils soient dans le mode de protection de moteur de traction (S205), si la température de roulement en temps réel avant l'acquisition des codes de défaillance dépasse le premier seuil de température.

4. Procédé selon la revendication 2, comprenant en outre :
la détermination que la température de roulement en temps réel avant l'acquisition des codes de défaillance dépasse ou non le deuxième seuil de température (S204) ; et
la limitation de la vitesse de déplacement la plus élevée au troisième seuil de vitesse et la commande de l'onduleur et du ventilateur de refroidissement pour qu'ils soient dans le mode de protection de moteur de traction (S206), si la température de roulement en temps réel avant l'acquisition des codes de défaillance dépasse le deuxième seuil de température.

5. Procédé selon la revendication 2, comprenant en outre :
la détermination que la défaillance du moteur de traction se produit ou non, dans le cas où les codes de défaillance sont acquis (S203) ; et
la limitation de la vitesse de déplacement la plus élevée au troisième seuil de vitesse et la commande de l'onduleur et du ventilateur de refroidissement pour qu'ils soient dans le mode de protection de moteur de traction (S206), si la défaillance du moteur de traction se produit.

6. Procédé selon l'une quelconque des revendications 1 à 5, comprenant en outre :
la détermination qu'une différence de vitesse entre une vitesse de déplacement réelle du train et le premier seuil de vitesse dépasse ou non un seuil de différence (S302), dans le cas où la vitesse de déplacement la plus élevée est limitée au premier seuil de vitesse ; et
l'application d'un freinage maximum au train après un intervalle de temps prédéfini si la différence de vitesse dépasse le seuil de différence (S303).

7. Procédé selon la revendication 6, comprenant en outre :
la détermination qu'une différence de vitesse entre la vitesse de déplacement réelle du train et le deuxième seuil de vitesse dépasse ou non le seuil de différence dans le cas où la vitesse de déplacement la plus élevée est limitée au deuxième seuil de vitesse, ou la détermination qu'une différence de vitesse entre la vitesse de déplacement réelle du train et le troisième seuil de vitesse dépasse le seuil de différence dans le cas où la vitesse de déplacement maximale est limitée au troisième seuil de vitesse ; et
l'application immédiate du freinage maximum au train si l'une ou l'autre des différences de vitesse dépasse le seuil de différence (S303).

8. Système de commande de surveillance et d'alerte relatif à la température d'un roulement de moteur de traction, comprenant :
une unité d'acquisition de température de roulement et d'informations de défaillance (100), configurée pour obtenir une température de roulement en temps réel d'un moteur de traction installé sur un train à partir d'un capteur de température de roulement de moteur de traction et détecter une défaillance du moteur de traction, dans lequel la défaillance comprend une défaillance de capteur de vitesse de roulement et une défaillance de mise à la terre du moteur de traction ;
une première unité de détermination de défaillance (200), configurée pour déterminer que la température de roulement en temps réel dépasse ou non un premier seuil de température, dans le cas où il est déterminé que le capteur de température de roulement n'est pas dans un état de défaillance ;
une seconde unité de détermination de défaillance (300), configurée pour déterminer que la température de roulement en temps réel dépasse ou non un second seuil de température ou que la défaillance du moteur de traction se produit ou non, si la température de roulement en temps réel dépasse le premier seuil de température ;
**caractérisé par**
une première unité de traitement (400), configurée pour limiter une vitesse de déplacement la plus élevée du train à un premier seuil de vitesse et commander à la fois un onduleur d'un convertisseur de traction dans le moteur de traction et un ventilateur de refroidissement dans le moteur de traction pour qu'ils soient dans un mode de protection de moteur de traction, si la température de roulement en temps réel ne dépasse pas le deuxième seuil de température et la défaillance du moteur de traction ne se produit pas ;
une deuxième unité de traitement (500), configurée pour limiter la vitesse de déplacement la plus élevée à un deuxième seuil de vitesse et commander l'onduleur et le ventilateur de refroidissement pour qu'ils soient dans le mode de protection de moteur de traction, si la température de roulement en temps réel dépasse le deuxième seuil de température ou si la défaillance du moteur de traction se produit ; et
une troisième unité de traitement (600), configurée pour limiter la vitesse de déplacement la plus élevée à un troisième seuil de vitesse et commander l'onduleur et le ventilateur de refroidissement dans le mode de protection de moteur de traction, si la température de roulement en temps réel dépasse le deuxième seuil de température et la défaillance du moteur de traction se produit,
dans lequel dans le mode de protection de moteur de traction, l'onduleur est dans un état de sortie sans couple et le ventilateur de refroidissement est dans un mode de refroidissement à haute vitesse pour protéger le moteur de traction, et le premier seuil de vitesse est supérieur au deuxième seuil de vitesse et le deuxième seuil de vitesse est supérieur au troisième seuil de vitesse.

9. Dispositif de commande de surveillance et d'alerte relatif à une température de roulement de moteur de traction, comprenant :
une mémoire, configurée pour stocker un programme informatique ; et
un processeur, configuré pour exécuter le programme informatique afin de réaliser des étapes du procédé de commande de surveillance et d'alerte relatif à la température de roulement de moteur de traction selon l'une quelconque des revendications 1 à 7.

10. Support de stockage lisible par ordinateur, dans lequel un programme d'ordinateur est stocké dans un support lisible par ordinateur, et des étapes du procédé de commande de surveillance et d'alerte relatif à la température de roulement de moteur de traction selon l'une quelconque des revendications 1 à 7 sont réalisées lorsque le programme d'ordinateur est exécuté par un processeur.
